# EUROPEAN PATENT SPECIFICATION

(11) **EP 2 053 016 B1**
(45) Date of publication and mention of the grant of the patent: **08.12.2010**
(21) Application number: 07118990.6
(22) Date of filing: 22.10.2007
(51) Int. Cl.: B67D 7/04

(54) **Device and method for handling a removable object from a larger object**
Vorrichtung und Verfahren zur Handhabung eines von einem größeren Objekt abnehmbaren Objekts
Dispositif et procédé pour manipuler un objet amovible d'un objet plus grand

(43) Date of publication of application: 29.04.2009
(73) Proprietor: Rotec Engineering B.V., 8304 BK Emmeloord (NL)
(72) Inventor: Hofman, Hendrik, 8531 PC Lemmer (NL); Koekoek, Menno, 8252 JK Dronten (NL); Van der Zee, Tino Walter, 8629 RE Scharnegoutum (NL); Groensma, Ype, 8441 CA Heerenveen (NL)
(74) Representative: Ketelaars, Maarten F.J.M.

(56) References cited:
- WO-A-94/03391
- US-A- 3 527 268
- US-A- 3 773 189

## Description

### Field of the invention

The present invention relates to a device and a method for handling a removable object from a larger object. In particular, the removable object may be a filler cap of a fuel tank of a vehicle.

### Prior art

A method and apparatus arranged for automatic refueling of vehicles like cars are known in the art, e.g. from American patents US5671786 and US6269848. In the automatic refueling apparatus described in these patents, a refueling robot is used for refueling of vehicles, like cars. A robot head that carries a fuel filler tube is movable to enable it provide fuel to a vehicle fuel-tank pipe. The robot head carries an opening device for opening a fuel-tank cover plate. The positioning of the robot head can be effected in different ways.

An apparatus according to the preamble of claim 1 is disclosed in US-A-3 773 189

In American patent US5671786, the robot head carries a transceiver and the vehicle carries a transponder. The transceiver is arranged to send a signal to the transponder. The transponder includes a code which is intended to be modulated on the signal transmitted by the transceiver. The transponder then reflects the modulated signal towards the transceiver. The modulated code on the modulated signal is decoded by the transceiver, and the code is used to access a robot head movement plan. The movement plan corresponds with that code and provides the robot head with a plan to move the fuel filler tube towards the fuel tank pipe for refueling.

In American patent US6269848, instead of a transceiver and transponder combination, a combination of a visually readable (bar) code and an optical sensor is used. The optical sensor is arranged adjacent to the robot head and is adapted to optically detect the position of the fuel-tank flap of a vehicle. The optical sensor is further arranged to sense a code that is optically readable and is being carried by the vehicle. Based on the code, a movement plan can be provided.

In aforementioned patents, the robot head is guided to the fuel-tank flap of a vehicle, arranged to open the fuel-tank flap by means of an opening device, and effectively dock the refueling nozzle, either both or the latter in accordance with aforementioned movement plan, and, finally, arranged to carry out these movements in a reverse order when refueling has been completed. However, many fuel-tanks are covered with a filler-cap. The position of the filler cap may be known with respect to the fuel-tank flap. Many filler caps are provided with a rim though, and the orientation of this rim is unknown. Positioning of the robot arm to enable removal of such a filler cap by grabbing the rim of the filler cap may be difficult. Either optical techniques may be employed to recognize the orientation of the rim, before the filler cap can be grabbed, or, alternatively, several grabbing attempts may be undertaken with different grabbing orientations, which may lead to a process of trial-and-error. Both techniques are rather complex and may take a considerable amount of time.

### Summary of the invention

It is desirable to simplify the handling of a filler cap, especially its removal, in a vehicle refueling system.

To that end, the invention provides a device for handling a removable object from a larger object, the removable object (being removable from the larger object by rotation of the removable object in a first rotational direction and being attachable to the larger object by rotating the removable object in a second rotational direction, the first rotational direction being opposite to the second rotational direction, the device comprising:
- a rotatable elongated element comprising a first part and a second part, the second part being moveable with respect to the first part in a direction along a rotation axis of said elongated element;
- a driving unit coupled to the first part and arranged for rotating the elongated element and moving the elongated element in a linear direction substantially parallel to the rotation axis of the elongated element;
- a gripper coupled to the second part, the gripper being arranged for gripping the removable object;
- a sensing unit arranged to detect movement of the second part with respect to the first part;
wherein the device is arranged to activate the gripper upon detection of a certain type of movement by the sensing unit.

Additionally, in an embodiment, the invention provides a vehicle refueling system comprising:
- a refueling station provided with fuel;
- a refueling nozzle connected to the refueling station;
- a robot provided with a robot arm that is moveable in at least three directions, the robot being arranged for carrying the refueling nozzle and moving the refueling nozzle in accordance with movement instructions; and
- a computer system arranged to provide the movement instructions to the robot;
wherein the robot arm accommodates aforementioned device.

Furthermore, in an embodiment, the invention provides a method of handling a removable object from a larger object, the removable object having a rotation axis and being removable from the larger object by rotation of the removable object in a first rotational direction and being attachable to the larger object by rotating the removable object in a second rotational direction, the first rotational direction being opposite to the second rotational direction, the method comprising:
- moving aforementioned device towards the removable object in a first linear direction substantially parallel to the rotation axis of the removable object, while rotating the device in the second rotational direction;
- activating movement detection of the second part of the rotatable elongated element with respect to the first part thereof for a predetermined period of time;
- activating the gripper, either upon detecting a certain type of movement or, if the certain type of movement has not been detected within the predetermined period of time, after the predetermined period of time has lapsed;
- stopping the moving and rotating of the device;
- moving the device in a second linear direction, the second linear direction being substantially opposite to the first linear direction, while rotating the device in the first rotational direction.

### Brief description of the drawings

Embodiments of the invention will now be described, by way of example only, with reference to the accompanying schematic drawings in which corresponding reference symbols indicate corresponding parts, and in which:
- Figure 1 schematically depicts a vehicle refueling system;
- Figure 2 schematically depicts an embodiment of a device for handling a rotationally removable object, like a filler-cap;
- Figure 3 depicts a further embodiment of a device for handling a rotationally removable object, in a first state;
- Figure 4 depicts the device for handling a rotationally removable object of Figure 3 in a second state;
- Figures 5a-5c schematically depict the operation of a sensing unit that may be used in embodiments of a device for handling a rotationally removable object;
- Figure 6 schematically depicts a sliding construction that may be used in embodiments of the device for handling a removable object from a larger object;
- Figure 7 depicts a cross-section of embodiment of the device for handling a rotationally removable object of Figures 3 and 4;
- Figure 8 schematically depicts an embodiment of a method for handling a rotationally removable object;
- Figure 9 shows an embodiment of a computer system that may be used in a vehicle refueling system.

### Detailed description

In this description, the invention will be explained with respect to a vehicle refueling system comprising an automatically controlled robot arranged to remove a filler-cap of a vehicle. It must be understood that embodiments of the invention are not limited to filler-caps of fuel tanks, but also may be used with respect to other types of rotationally removable objects.

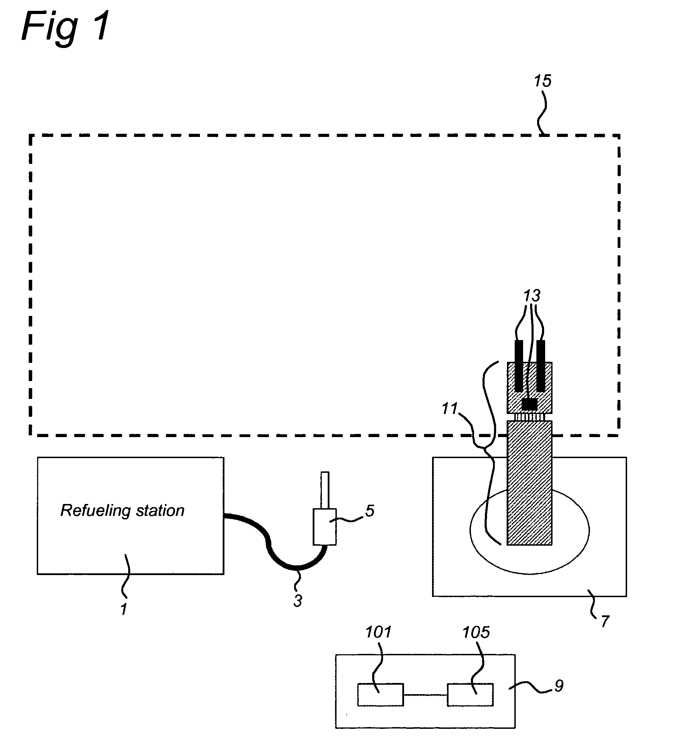

Figure 1 schematically depicts a vehicle refueling system, e.g. cars. The system comprises a refueling station **1** provided with fuel, a refueling nozzle **5** connected to the refueling station **1,** e.g. by means of a hose **3,** a robot **7** arranged for carrying the refueling nozzle **5** and moving it in accordance with movement instructions, and a computer system **9** arranged to provide said movement instructions to said robot **7.** The refueling station **1** and the refueling nozzle **5** may correspond to tanks and refueling nozzles widely used in present day fuel stations.

The robot **7** is provided with a robot arm **11** that is moveable in at least three directions. The robot arm **11** is capable of accommodating a number of devices **13.** The devices **13** include a refueling nozzle fetching and carrying device, a fuel-tank flap opening device, a filler-cap handling device, and an optical detector. The devices **13** may further include one or more devices selected from a group consisting of a receiver, a touch sensor and a laser distance measuring device. Operation of aforementioned devices will be discussed hereafter in more detail.

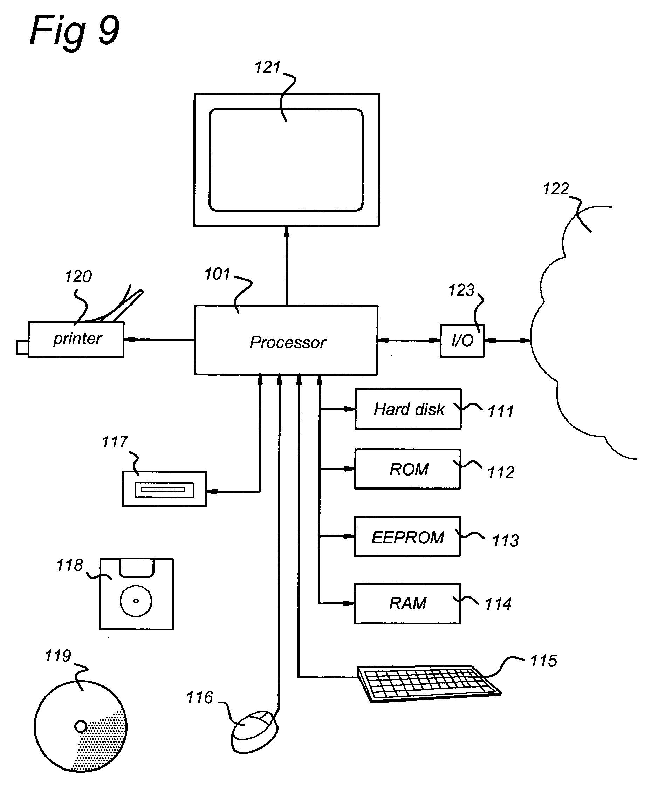

The computer system **9** comprises at least a processor **101** and a memory **105.** Further details with respect to embodiments of the at least one processor **101** and memory **105,** as well as other components that may be present in the computer system, will be described with reference to Figure 9.

The vehicle refueling system depicted in Figure 1, may operate as follows. First, a vehicle is positioned within an area **15** that can be covered by the robot arm **11** of the robot **7.** The optical detector, e.g. a camera, is arranged to detect the position of the vehicle within the area **15.** The optical detector is communicationally connected with the computer system **9.** When the position of the vehicle is determined by means of the optical detector, position information is sent to the computer system **9.**

The vehicle may be provided with a transponder. The transponder is arranged to transmit a signal provided with transponder information. The transponder information may comprise information corresponding to the vehicle or, alternatively, to a driver of the vehicle. In these cases, the robot **7** is provided with a receiver arranged to receive the signal transmitted by the transponder. The receiver is communicationally connected to the computer system **9.** The transponder information provided in the received signal is then used by the computer system **9** to obtain data related to the vehicle positioned within the area **15,** especially information related to the type of car and parameters related thereto like the type of fuel-flap, the type of filler cap, their position with respect to each other, the plane of the bodywork in which the fuel-tank flap is embedded with respect to a horizontal plane and the position of the fuel-tank flap on the vehicle.

The computer system **9** may use the position information in combination with the transponder information to determine a position of the fuel-tank flap. If necessary, instructions may be given to the driver of the vehicle to position the fuel-tank flap within closer range of the robot. In such a case, new position information needs to be determined by means of optical detection with the optical detector.

In case the vehicle is positioned sufficiently close with respect to the robot **7,** the robot **7** is instructed by the computer system **9** to fetch the correct refueling nozzle **3** with the refueling nozzle fetching and carrying device provided on the robot arm **11.** In case there are more refueling nozzles **3** available, each refueling nozzle arranged for refueling a different type of fuel, the robot may know which refueling nozzle **3** to take from aforementioned transponder information. As mentioned earlier, the transponder information may include data with respect to the plane of the fuel-tank flap, i.e. the angle of the vehicle's bodywork with respect to the road. The robot 7 may now position the optical detector in a plane perpendicular to the plane of the fuel-tank flap. The distance between the robot 7 and the fuel-tank flap may now be determined by means of the optical detector, for example in a way as described hereinafter.

In an embodiment, the optical detector includes a camera. In order to determine aforementioned distance between the robot 7 and the fuel-tank flap, the following procedure may be followed. First, the camera takes, at a first position, a first picture of an area of the vehicle in which the fuel-tank flap is embedded. Subsequently, the camera is moved in a specified direction along, towards or away from the vehicle to reach a second position. At the second position, a second picture of the same area is taken. Both pictures are sent to the computer system **9** in a way known to a person skilled in the art. The computer system **9** then employs suitable pattern recognition techniques, e.g. so-called template matching, to determine the position of the fuel-tank flap within the pictures. Additionally, by comparison of the first and second picture, a global position of the fuel-tank flap relative to the robot **9** can be determined.

Alternatively or additionally, the optical detector may comprise a laser distance measuring device. The laser distance measuring device may be used to determine a distance towards the fuel-tank flap. Moreover, a laser may be used to define the position of the fuel-tank flap, e.g. in a way as described in American patent US6269848.

If an even more accurate position of the plane and position of the fuel-tank flap is required, the robot 7 may further comprise a touch sensor. The touch sensor is communicationally connected to the computer system **9.** The touch sensor is arranged to abut the bodywork of the vehicle at at least three predicted locations, the at least three predicted locations being predicted by using the transponder information in combination with the information received by means of the camera and/or laser distance measuring device. In an embodiment, the touch sensor is further arranged to scan in a predetermined fashion around each predicted location if the predicted location turns out to be incorrect. If the correct location is found, the difference between the correct location and the predicted location may be determined. Based on at least three locations determined in this way a more accurate plane and/or position of the fuel-tank flap may be calculated.

As mentioned earlier, the transponder information may include information with respect to the type of fuel-tank flap. The information with respect to the type of fuel-tank flap does not only include information with respect to its plane and position, but also includes information with respect to the opening direction of the fuel-tank flap, i.e. whether it opens to the left side, to the right side, etc. The computer system **9** is arranged to calculate route information which takes aforementioned information with respect to the type of fuel-tank flap into account. The route information as calculated by the computer system **9,** when sent from the computer system towards the robot, enables the robot arm to perform movements required for opening the fuel flap. If necessary, additional measurements may be performed with the optical detector, e.g. by making additional pictures with a camera, to enable accurate calculation of aforementioned route information.

The computer system **9** may further be arranged to calculate an attachment position for the fuel-tank flap opening device based on the determined position and plane of the fuel-tank flap at hand. The fuel-tank flap opening device provided on the robot arm is arranged to open the fuel-tank flap based on the route information and the attachment position calculated by the computer system **9.** In an embodiment, the fuel-tank flap opening device is mounted on a load-cell. In an embodiment thereof, the load cell served as a touch sensor at an earlier stage. The fuel-tank flap opening device may include a sucking cup. In such a case, the fuel-tank flap opening device is arranged to open the fuel-tank flap by positioning the sucking cup at the attachment position and moving the sucking cup after attachment in such a direction that the fuel-tank flap opens. This movement may be a linear movement.

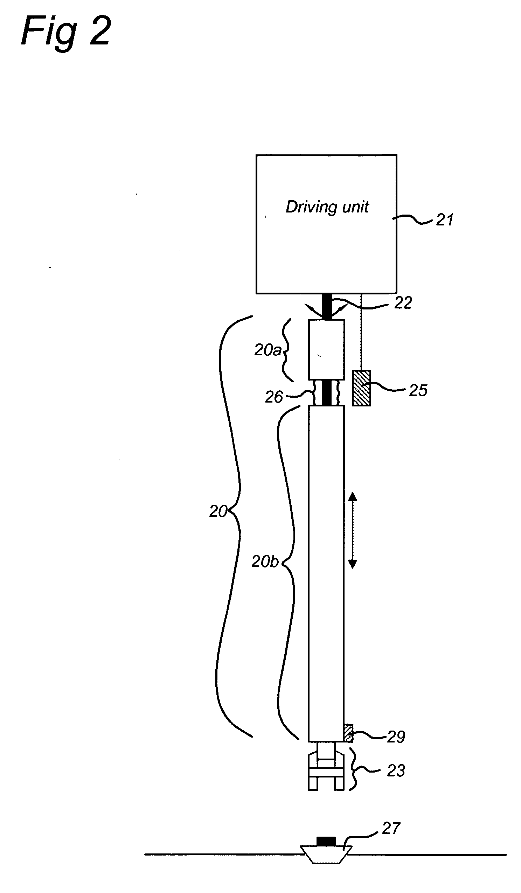

After opening the fuel-tank flap, the fuel tank opening of the vehicle is still covered by a filler-cap. The position of the filler-cap with respect to the fuel-tank flap may be present in the transponder information. Alternatively, its position may be determined by means of the optical detector, e.g. in a way similar as described before with respect to determining the position of the fuel-tank flap. When the position of the filler-cap is known, the filler-cap is removed by means of the filler-cap handling device. Embodiments of the invention related to a device and method for removing a rotationally removable object like a filler-cap will be discussed in more detail with reference to Figures 2 to 7.

In case the optical detector comprises a camera, at this stage a tank opening reference picture may be made of the absolute position of the tank opening. That is, the position of the tank opening with respect to the absolute position of the camera is determined, e.g. a fixed position with respect to a coordinate system with a predetermined origin.

The robot 7 may now use data from the computer system **9,** e.g. additional route information, to position the fetched refueling nozzle **3** in the tank opening in such a way that refueling may start. The refueling nozzle fetching and carrying device provided on the robot arm **11** may be arranged to control the refueling nozzle **3.** If the refueling nozzle **3** is accurately positioned in the tank opening, the refueling nozzle fetching and carrying device provided on the robot arm **11** may pull the trigger of the refueling nozzle **3** to start refueling.

When the fuel-tank of the vehicle is filled, the robot 7 removes the refueling nozzle **3** from the vehicle tank opening by means of the refueling nozzle fetching and carrying device provided on the robot arm **11** and may place the refueling nozzle **3** back in its original position within the vehicle refueling system.

In case the optical detector comprises a camera, a tank opening shift picture may be made of the absolute position of the tank opening. As a result of the refueling, the vehicle has gained weight, and the absolute position of the tank opening has shifted. The computer system **9** may be arranged to compare the tank opening reference picture and the tank opening shift picture, and calculate what the new position of the filler cap should be.

Subsequently, the filler cap handling device, which still holds the filler-cap of the vehicle, is moved towards the new position of the filler cap, and the filler cap is put back on the tank opening. Subsequently, the robot 7 closes the tank-flap, e.g. by means of the fuel-tank flap opening device.

Finally, the driver may be informed that automatic refueling was successfully completed, and that he may continue his/her journey. Payment may be performed in any way as known in the art.

Figure 2 schematically depicts an embodiment of a device for handling a removable object from a larger object. The device comprises a rotatable elongated element **20** having two ends. At a first end, the rotatable elongated element **20** is coupled to a driving unit **21** via a rotatable shaft **22.** At a second end, the element **20** is provided with a gripper **23.** The device for handling a removable object further comprises a sensing unit **25.**

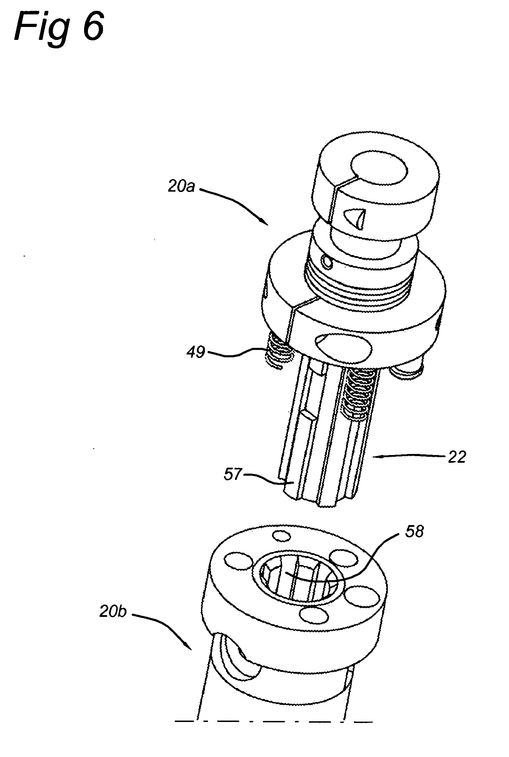

The rotatable, elongated element **20** comprises two parts, i.e. a first part **20a** and a second part **20b.** The first part **20a** is arranged for supporting connection of the rotatable axis **22** with the driving unit **21.** The second part **20b,** comprises a cylindrical construction which is able to move with respect to the first part **20a.** The first part **20a** and second part **20b** may be connected to each other by means of springs **26** or the like. The second part **20b** is moveable with respect to the first part **20a** in a direction along the rotatable shaft **22** by means of a slide construction. More details with respect to an embodiment of the slide construction are shown in and described with reference to Figure 6. Consequently, the second part **20b** can only be moved in a linear direction with respect to first part **20a.** Rotational movement of the second part **20b** with respect to the first part **20a** is prevented by aforementioned slide construction.

The removable object **27** has a rotation axis. The removable object **27** is removable from the larger object by rotation of the removable object in a first rotational direction. The removable object **27** is attachable to the larger object by rotating the removable object in a second rotational direction. The first rotational direction is opposite to the second rotational direction. In an embodiment, the removable object **27** is a filler-cap of a fuel tank of a vehicle.

The driving unit **21** is arranged for rotating the elongated element **20.** The driving unit **21** may further be arranged to move the elongated element **20** in a first linear direction substantially parallel to the rotation axis of the removable object **27.** As a result of aforementioned rotation of the elongated element **20,** and similarly as a result of aforementioned linear movement of the elongated element **20** the gripper also rotates and moves linearly respectively . In an embodiment, the driving unit **21** comprises an electro-motor.

The gripper **23** is arranged for gripping a removable object **27** from a larger object. The gripper **23** may be provided with at least two gripping units. The at least two gripping units are arranged with respect to each other to enable a gripping action.

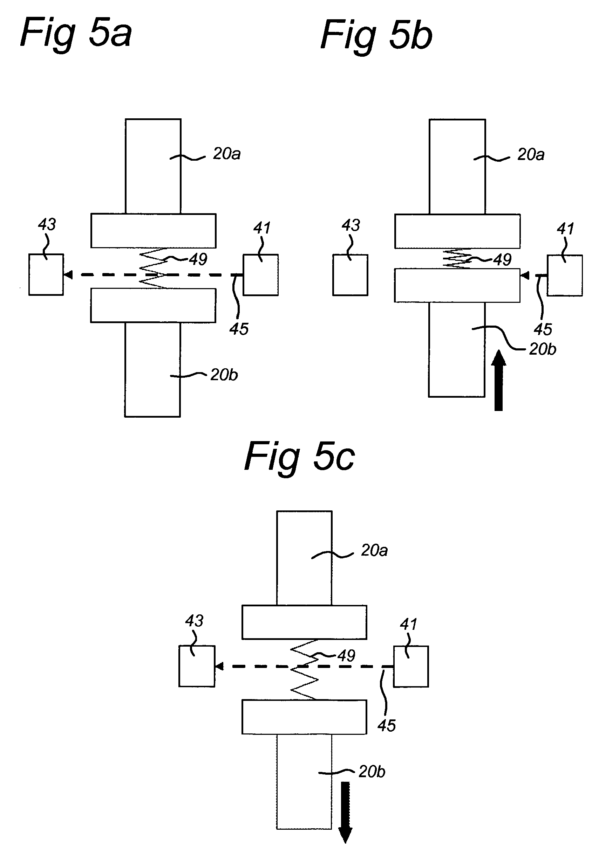

The sensing unit **25** is arranged for sensing a non-linear change of movement of the rotatable elongated element **20** in a direction parallel to the first linear direction. In an embodiment, the sensing unit **25** is a light sensor. The light sensor is arranged such that depending on the position of the second part **20b** of the elongated element **20** light is detected or not. More details with respect to a light sensor as sensing unit **25** is explained with reference to Figure 5.

In an alternative embodiment (not shown), the sensing unit **25** may comprise some type of sensor for sensing a force. In such a case, the connection between the first part **20a** and the second part **20b** may be such that a force can develop between them. The sensing unit **25** is then arranged to detect a rapid variation in that force.

The device may further comprise a control unit **29.** The control unit may be communicationally connected to the sensing unit **25.** In an embodiment, the sensing unit **25** is further arranged to generate a sensing signal indicating a movement of the second part **20b** of the rotatable elongated element **20** with respect to the first part **20a** thereof has been detected. The control unit **29** may be arranged for activating the gripper **23** in response to reception of aforementioned sensing signal.

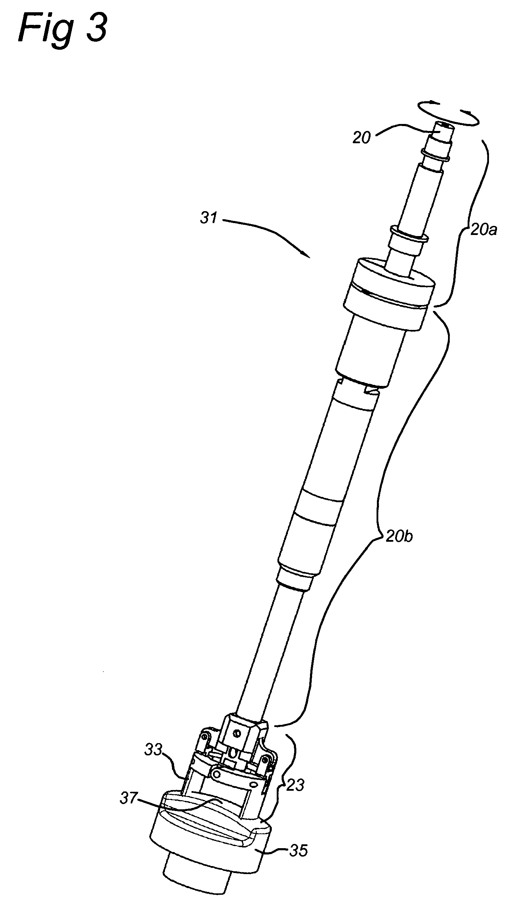

Embodiments of the device for handling a removable object from a larger object are explained in more detail with reference to Figures 3-6.

Figure 3 depicts a more detailed embodiment of a device **31** for handling a rotationally removable object, like a filler-cap, from a larger object. The device **31** is depicted while being in a first state.

In this embodiment, the gripper **23** is provided with at least two gripping units **33.** The at least two gripping units **33** are arranged with respect to each other to enable a gripping action. In the first state as shown in Figure 3, the gripping units **33** are in an opening position, i.e. no gripping action is performed.

The rotatable shaft **22** of the device **31** is arranged to be rotated by the driving unit (not shown) in the first rotational direction, i.e. the rotational direction of removal, while linearly moving the device **31** in a direction parallel to the rotatable shaft **22** of the device **31** towards the rotationally removable object **27,** in Figure 3 a filler-cap **35** provided with a rib **37** which orientation is unknown. The orientation of the rotatable shaft **22** of the device **31** is substantially parallel to the rotation axis of the rotationally removable object **27.** Additionally, the orientation of the rotatable shaft **22** of the device **31** may further be substantially perpendicular to the orientation of the surface of the rotationally removable object **27.**

If, as is depicted in Figure 3, the device **31** abuts with the filler-cap **35** on top of the rib **37,** the rotational movement of the rotatable shaft **22** will continue. However, the linear movement of the rotatable shaft **22** towards the filler-cap **35** is blocked.

As a result, a force develops between the first part **20a** and the second part **20b** of the rotatable shaft **22.** The sensing unit **25** may be arranged to sense aforementioned development of a pressure force, e.g. by detecting movement in a sliding construction as mentioned earlier.

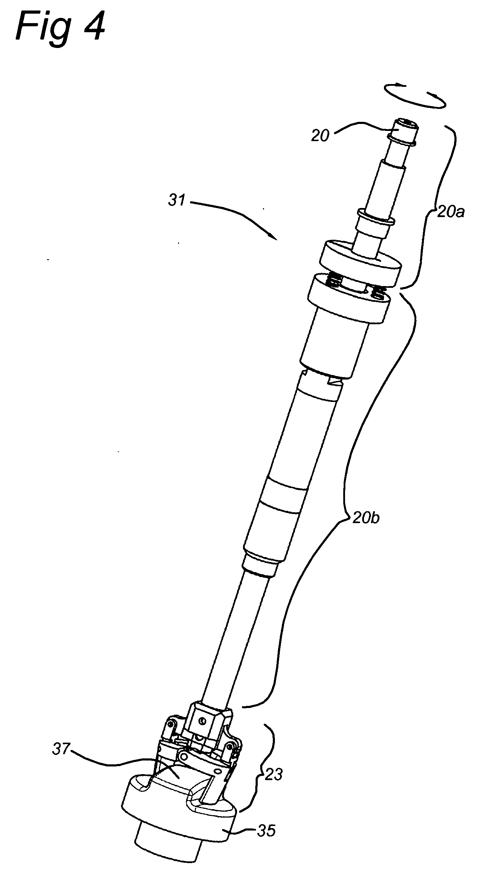

Figure 4 depicts the device **31** for handling a rotationally removable object of Figure 3 in a second state. In the second state, the at least two gripping units **33** are in a closing position, i.e. a gripping action is performed. In other words, the gripper **23** is activated. Between the first state depicted in Figure 3 and the second state depicted in Figure 4 the following may have happened.

As mentioned with respect to the first state in Figure 3, a force develops between the first part **20a** and the second part **20b** of the rotatable shaft **22** if the linear movement of the gripper **23** is blocked by the upper surface of the rim **37** of the filler-cap **35.** However, as rotation continues, the at least two gripping units **33** eventually obtain an orientation in which they no longer make contact with the upper surface of the rim **37.** At the moment the contact between the two gripping unit **33** and the upper surface of the rim **37** of the filler cap **35** is lost, the force that has been developed between the first part **20a** and the second part **20b** is released. This non-linear movement is detected by the sensing unit **25.** Upon detection, the sensing unit **25** may send a sensing signal towards the control unit **29.** In its turn, the control unit **29,** upon receipt of said sensing signal, activates the gripper **23,** i.e. a gripping action is performed by the gripping units **33** as they move from an opening position towards a closing position.

Alternatively, in case the device **31** does not abut with the filler-cap **35** on top of the rib **37,** but contacts the rib **37** later, the rotational movement of the rotatable shaft **22** will be blocked. As mentioned in the description with reference to Figure 1, the distance towards the fuel-tank is known. Furthermore, information regarding the size of the filler-cap may be provided in the transponder information. So, if the device **31** in its linear movement towards the filler-cap **35** passes the top surface of the rib **37** in view of the known distance towards the fuel-tank in combination with the known height of the filler-cap **35,** the device **31** may be triggered to enable the gripping action if rotational movement is blocked. Finally, if the device **31** reaches the bottom surface of the filler-cap **35** before rotational movement is stopped, upon detection of a blocking of the linear movement due to abutment with the bottom surface of the filler-cap **35,** a gripping action is performed.

In an embodiment, the gripping units **33** have a semi-circular shape. This shape enables the gripping units **33** to grab the sides of the rim **37,** even if their orientation with respect to the rim **37** is less than optimal, when the gripping action is activated.

Figures 5a-5c schematically depict the operation of a sensing unit that may be used in embodiments of a device for handling a rotationally removable object. The sensing units comprises two components, a light source **41** and a light detector **43.** The light source **41** is arranged to generate a light beam **45** in a direction towards the light detector **43.** The light detector **43** is arranged to detect the light beam **45** emitted by the light source **41.** The path of the light beam **45** between the light source **41** and light detector **43** crosses a space between the first part **20a** and second part **20b** of the rotatable elongated element **20.** Note that the rotatable axis **22,** which is depicted in figures 2-4, is not shown to enhance the clarity of Figures 5a-c. The first part **20a** and second part **20b** are connected to each other by means of a flexible connecting unit **49** like a spring **26.** The light source **41** may be connected to the robot arm, denoted in Figures 1, 2 by reference number **11,** or, alternatively, to the first part **20a** of the rotatable elongated element **20.** The light detector **43** may also be connected to the robot arm or the first part of the rotatable elongated element.

Figure 5a represents a configuration of the first and second part **20a, 20b,** the light source **41** and light detector **43** in case the rotatable elongated element is directed towards the removable object while rotating before the gripper makes contact with the removable object. In this case, the light generated by the light source **41** is detected by the light detector **43.**

When the gripper at the second end of the rotatable elongated element contacts the upper surface **37** of the rim of the removable object, which situation is schematically depicted in Figure 3, the upper surface **37** blocks the linear movement of the rotatable elongated element and the second part **20b** is pushed in a direction towards the first part **20a,** a movement schematically depicted by the arrow in Figure 5b. Due to this movement energy is stored in the flexible connecting unit **49.** Furthermore, the light beam **45** generated by the light source **41** is blocked by the second part **20b,** and the detector **43** no longer detects the light beam **45.** In an embodiment, the sensing unit **25,** upon detecting that the light beam **45** is no longer detected alarms the control unit, e.g. control unit **29** in Figure 2, to be ready for activation.

When the orientation of the gripping units is such that the gripper moves over the upper surface **37** of the rim of the removable object, the energy stored in the flexible connecting unit **49** is released, and the second part **20b** moves in a direction away from the first part **20a,** a movement schematically depicted by the arrow in Figure 5c. Due to this movement of the second part **20b** the detector **43** now again detects the light beam **45** generated by the light source **41,** as the second part **20b** no longer blocks the light beam **45.** Upon redetection of the light beam **45** by the light detector **43,** the sensing unit sends a signal towards the control unit, e.g. control unit **29** in Figure 2, to activate the gripper. As a result, a gripping action is performed which results in a situation as schematically depicted in Figure 4.

It must be understood that alternative arrangements of a light sensor as sensing unit **25** may be used in embodiments of the device for handling a rotationally removable object according to the invention. The light source **41** may generate multiple light beams, each light beam configured to cross the space between the first and second part **20a, 20b** of the rotatable elongated element **20** at a different "height" level. With such an arrangement, smaller movements of the second part **20b** with respect to the first part **20a** may be detected than would be possible in a single-beam embodiment.

Alternatively, the light sensor may be arranged in such a way that the light beam **45** can only be detected by the detector **43** in case the second part **20b** moves away from the first part **20a** beyond the distance between the two in case no energy is stored in the flexible connecting element **49,** i.e. in a situation schematically depicted in Figure 5c.

It must be understood that embodiments of the invention may also use a different type of sensor as a sensing unit **25,** e.g. a pressure sensor located between the first part **20a** and second part **20b,** a sensor operating in a similar way as the light sensor presented above but using a different type of radiation, a distance sensor like a capacitance sensor arranged to measure the distance between the first part **20a** and the second part **20b,** an induction sensor arranged to detect a change of position of the second part **20b** due to detection of a change in induction current, etc.

Figure 6 shows in more detail an embodiment of a sliding construction that enables a controlled movement of the second part **20b** of the rotatable elongated element **20** with respect to the first part **20a** thereof, in particular the movements schematically depicted by arrows in Figures 5b and 5c. In this embodiment, a splined shaft is used as rotation shaft **22.** That is, the rotation shaft **22** is divided in two parts, a first sub-part and a second sub-part. The first part of the splined shaft is connected to the first part **20a** of the device. The second part of the splined shaft is integrated in the second part **20b** of the device. The second part **20b** comprises a hollow chamber in order to accommodate the first sub-part of the splined shaft. The first part of the rotation shaft **22** is provided with one or more extended structures **57,** e.g. ridges. The inner surface of the hollow chamber of the second part of the device **20b** is provided with one or more complementary recesses **58,** e.g. slits or grooves. This arrangement of the first and second sub-parts of the rotation shaft **22** enable accommodation of one or more extended structures **57** of the first sub-part in such a way that the one or more extended structures **57** can be moved within one or more recesses **58** in the second sub-part such that a guided movement is established, while the first and second sub-parts do not rotate with respect to each other.

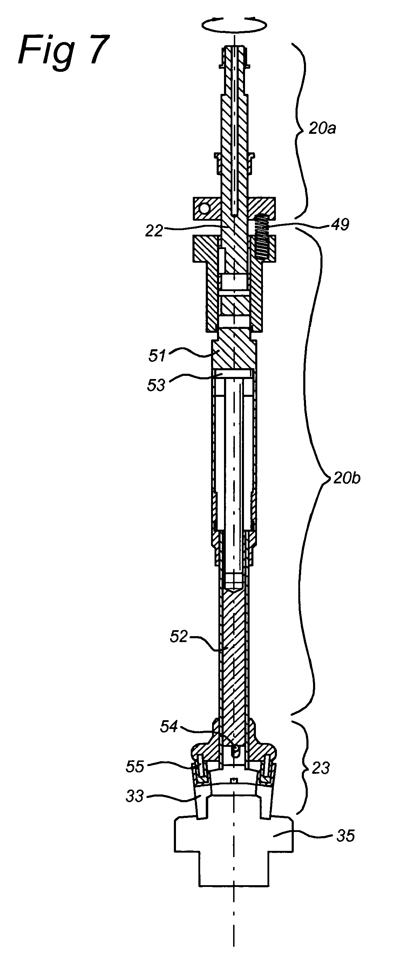

Figure 7 depicts a cross-section of the device **31** for handling a rotationally removable object of Figures 3 and 4. Figure 7 schematically shows the sliding construction as explained in more detail with reference to Figure 6. Additionally, Figure 7 schematically shows a control mechanism of the gripper **23.** The control mechanism of the gripper **23** comprises a hollow chamber **51.** In the hollow chamber **51,** a piston construction **53** is shown, which may control movement of a elongated structure **52.** The elongated structure **52** is connected to the gripping units **33** via a pin **54** and one or more springs **55.** Upon activation by the control unit **29** (not shown), in a way known to the person skilled in the art, aforementioned control mechanism may activate and deactivate the gripper **23** and control movement of the gripping units **33.**

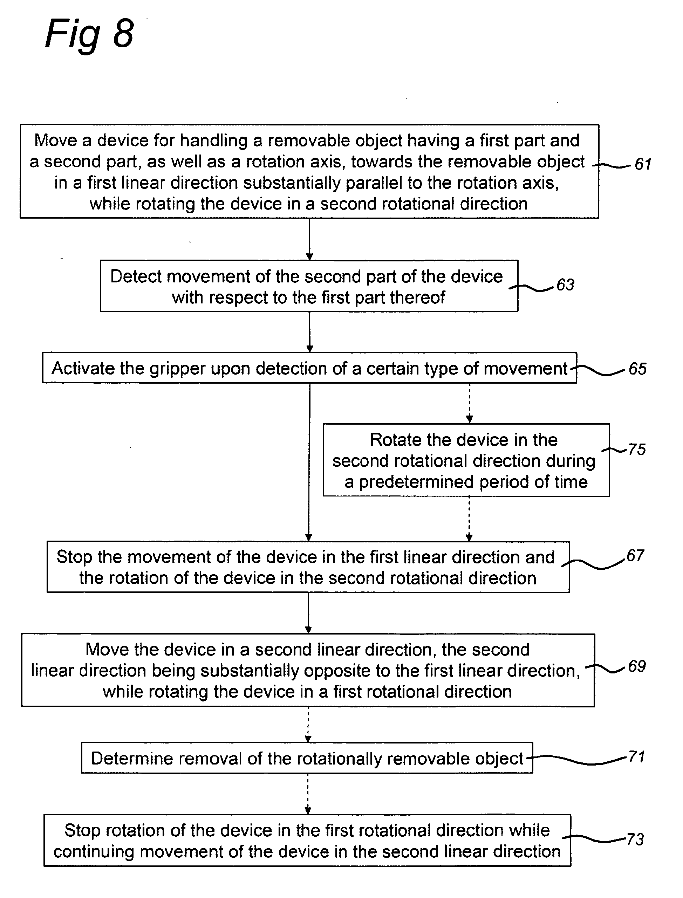

Figure 8 schematically depicts an embodiment of a method for handling a removable object from a larger object. The method may be executed by software loaded in a computer system, e.g. computer system **9** depicted in Figure 1. The software may be in the form of computer executable code stored on a computer readable medium which can be loaded on the computer system.

In an embodiment, the removable object is a filler-cap of a fuel-tank of a vehicle. In the method, embodiments of the device for handling a rotationally removable object, e.g. embodiments shown in Figures 2-7, may be used.

As mentioned earlier, the removable object is removable from a larger object. It has a rotation axis. The removable object is removable form the larger object by rotation of the removable object in a first rotation direction. The removable object may further be attachable to the larger object by rotating the removable object in a second rotational direction, the second rotational direction being opposite to the first rotational direction.

In the embodiment of the method shown in Figure 8, first, in action **61,** the device for handling a removable object is moved towards the rotationally removable object in a first linear direction. The first linear direction corresponds to a direction towards the rotationally removable object, and is further substantially parallel to the rotation axis of the removable object. Simultaneously, the device is rotating about its rotatable shaft in the second rotational direction.

Subsequently, in action **63,** detection of a movement of the second part of the rotatable elongated object with respect to the first part thereof is activated for a predetermined period of time. The predetermined period of time is related to the distance between the device and the removable object when starting action **61.** It corresponds to the time that is needed to transfer the device across aforementioned distance at the movement velocity of the device in the first linear direction.

In response to detecting a certain type of movement, in action **65,** the gripper is activated. This results in the device performing a gripping action as is explained with reference to Figures 3-7. If no certain type of movement has been detected within the predetermined period of time, i.e. the device has reached the surface of the larger object, the gripping action is performed after the predetermined period of time has lapsed.

After activation of the gripper in action **65,** in action **67,** the movement of the device in the first linear direction and the rotation of the device in the second rotational direction is stopped.

Finally, in action **69,** the device is moved in a second linear direction, the second linear direction being substantially opposite to the first linear direction. Simultaneously the device is rotated about its rotatable shaft in the first rotational direction.

In an embodiment, the method further includes, in action **71,** determining removal of the rotationally removable object, and, subsequently in action **73,** stopping the rotation in the first rotational direction while continuing the movement in the second linear direction. The movement in the second linear direction may then be stopped when the removed rotationally removable object has reached a certain position. In an embodiment, determining removal of the rotationally removable object is performed by counting a predetermined number of rotations in said first rotational direction. The number of rotations needed to remove the removable object may be part of transponder information obtained in a way as described earlier with reference to Figure 1. Please note that the gripping action is firm enough to ensure that the filler-cap is not dropped after removal.

Finally, in embodiments of the method, the method may further comprise an additional action, between actions **65** and **67,** i.e. activating the gripper and stopping the moving and rotating of the device respectively. In this additional action, i.e. action **75,** the device is rotated in the second rotational direction during a further predetermined period of time. Generally, this further predetermined period of time will be limited, i.e. enough to ensure that the removable object is attached sufficiently to the larger object. The additional rotational movement in the second rotational direction may ensure that the gripping units are well in place, before starting subsequent actions.

Figure 9 shows an embodiment of a computer system **100** that may be used in a vehicle refueling system, e.g. in a way as computer system **9** schematically depicted in and described with reference to Figure 1. In such an automatic fueling system, the computer system **100** may be arranged to control the movements of a driving unit, e.g. driving unit **21,** responsible for the rotation and moving of the rotatable axis of the device for handling a rotationally removable object, e.g. according to the method described with reference to Figure 7. The computer system **100** may be arranged for loading a computer readable medium comprising computer executable code. This may enable the computer system **100 to** execute, when the computer executable code on the computer readable medium is loaded, embodiments of aforementioned method of handling a removable object from a larger object.

The computer system **100** comprises a processor **101** and a memory **105.** The memory **105,** which is connected to the processor **101,** may comprise a number of memory components like a hard disk **111,** Read Only Memory (ROM) **112,** Electrically Erasable Programmable Read Only Memory (EEPROM) **113** en Random Access Memory (RAM) **114.** Not all aforementioned memory components need to be present. Furthermore, it is not essential that aforementioned memory components are physically in close proximity to the processor **101** or to each other. They may be located at a distance away

The processor **101** may also be connected to some kind of user interface, for instance a keyboard **115** or a mouse **116.** A touch screen, track ball, speech converter or other interfaces that are known to persons skilled in the art may also be used.

The processor **101** may be connected to a reading unit **117,** which is arranged to read data from and under some circumstances store data on a data carrier, like a floppy disc **118** or a CDROM **119.** Also DVD's or other data carriers known to persons skilled in the art may be used.

The processor **101** may also be connected to a printer **120** to print out output data on paper as well as to a display **121,** for instance a monitor or LCD (Liquid Crystal Display), of any other type of display known to a person skilled in the art.

The processor **101** may be connected to a communications network **122,** for instance a public switched telephone network (PSTN), a local area network (LAN), a wide area network (WAN) etc. by means of transmitters/receivers **123** responsible for input/output (I/O). The processor **101** may be arranged to communicate with other communication systems via the communications network **122.** In an embodiment of the invention external computers (not shown), for instance personal computers of operators, can log into the processor **101** via the communications network **122.**

The processor **101** may be implemented as an independent system or as a number of processing units that operate in parallel, wherein each processing unit is arranged to execute sub-tasks of a larger program. The processing units may also be divided in one or more main processing units with several subprocessing units. Some processing units of the processor **101** may even be located a distance away of the other processing units and communicate via communications network **122.**

While specific embodiments of the invention have been described above, it will be appreciated that the invention may be practiced otherwise than as described.

The descriptions above are intended to be illustrative, not limiting. Thus, it will be apparent to one skilled in the art that modifications may be made to the invention as described without departing from the scope of the claims set out below.

## Claims

1. A device for handling a removable object from a larger object, the removable object (27) being removable from the larger object by rotation of the removable object (27) in a first rotational direction and being attachable to the larger object by rotating the removable object (27) in a second rotational direction, the first rotational direction being opposite to the second rotational direction, the device comprising:
- a rotatable elongated element (20) comprising a first part (20a) and a second part (20b), said second part (20b) being moveable with respect to said first part (20a) in a direction along a rotation axis of said elongated element (20);
- a driving unit (21) coupled to said first part (20a) and arranged for rotating said elongated element (20) and moving said elongated element (20) in a linear direction substantially parallel to said rotation axis of said elongated element (20);
- a gripper (23) coupled to said second part (20b), the gripper (23) being arranged for gripping the removable object (27);
**characterised in that** the device further comprises
- a sensing unit (25) arranged to detect movement of said second part (20b) with respect to said first part (20a);
wherein said device is arranged to activate said gripper (23) upon detection of a certain type of movement by the sensing unit (25).

2. A device according to claim 1, wherein said certain type of movement corresponds to a movement of said second part (20b) towards a position within a predetermined distance from said first part (20a).

3. A device according to claim 1 or 2, wherein said sensing unit (25) is further arranged for generating a sensing signal indicating detection of said certain type of movement, and said device further comprises a control unit (29) arranged for activating said gripper (23) in response to reception of said sensing signal.

4. A device according to claim 3, wherein said sensing unit (25) comprises a light sensor having a light source (41) and a light detector (43), and said control unit (29) is arranged to activate the gripper (23) in response to a sensing signal indicating a certain difference in light intensity.

5. A device according to claim 3, wherein said sensing unit (25) comprises a pressure sensor arranged for measuring a pressure force between said first part (20a) and said second part (20b), and said control unit (29) is arranged to activate the gripper (23) in response to a sensing signal indicating a certain difference in pressure force.

6. A device according to any one of claims 2-5, wherein said control unit (29) is arranged to use a piston construction (51, 53) to activate said gripper (23).

7. Device according to any one of the preceding claims, wherein said gripper (23) is provided with at least two gripping units (33), the at least two gripping units (33) being arranged with respect to each other to enable a gripping action.

8. Device according to claim 7, wherein said at least two gripping units (33) have a semi-circular shape.

9. Device according to any one of the preceding claims, wherein said rotationally removable object (27) is a filler-cap (35) of a fuel-tank of a vehicle.

10. A vehicle refueling system comprising:
- a refueling station (1) provided with fuel;
- a refueling nozzle (5) connected to the refueling station (1);
- a robot (7) provided with a robot arm (11) that is moveable in at least three directions, said robot (7) being arranged for carrying said refueling nozzle (5) and moving said refueling nozzle (5) in accordance with movement instructions; and
- a computer system (9) arranged to provide said movement instructions to said robot (7);
wherein said robot arm accommodates a device according to any one of claims 1-8.

11. Method of handling a removable object from a larger object, the removable object (27) having a rotation axis and being removable from the larger object by rotation of the removable object (27) in a first rotational direction and being attachable to the larger object by rotating the removable object (27) in a second rotational direction, the first rotational direction being opposite to the second rotational direction, the method comprising:
- moving a device according to any one of claims 1 - 9 towards said removable object (27) in a first linear direction substantially parallel to the rotation axis of the removable object (27), while rotating said device in said second rotational direction;
- activating movement detection of the second part (20b) of the rotatable elongated element (20) with respect to the first part (20a) thereof for a predetermined period of time;
- activating the gripper (23), either upon detecting a certain type of movement or, if said certain type of movement has not been detected within said predetermined period of time, after said predetermined period of time has lapsed;
- stopping said moving and rotating of said device;
- moving said device in a second linear direction, said second linear direction being substantially opposite to said first linear direction, while rotating said device in said first rotational direction.

12. Method according to claim 11, wherein said certain type of movement corresponds to a movement of said second part (20b) towards a position within a predetermined distance from said first part (20a).

13. Method according to claim 11 or 12, wherein said method further comprises
- determining removal of said rotationally removable object (27); and
- stopping said rotating in said first rotational direction while continuing said moving in said second linear direction.

14. Method according to any one of claims 10 - 13, wherein said determining is performed by counting a predetermined number of rotations in said first rotational direction.

15. Method according to any one of claims 11 - 14, wherein said method, between said activating the gripper (23) and stopping said moving in a first linear direction and rotating in a second rotational direction, further comprises rotating said device further in said second rotational direction during a further predetermined period of time.

## Patentansprüche

1. Vorrichtung zur Handhabung eines aus einem größeren Gegenstand entnehmbaren Gegenstands, wobei der entnehmbare Gegenstand (27) aus dem größeren Gegenstand durch Drehung des entnehmbaren Gegenstands (27) in einer ersten Drehrichtung entnommen werden kann und am größeren Gegenstand durch Drehen des entnehmbaren Gegenstands (27) in einer zweiten Drehrichtung angebracht werden kann, wobei die erste Drehrichtung der zweiten Drehrichtung entgegengesetzt ist, wobei die Vorrichtung aufweist:
- ein drehbares langgestrecktes Element (20), das ein erstes Teil (20a) und ein zweites Teil (20b) aufweist, wobei das zweite Teil (20b) im Hinblick auf das erste Teil (20a) in einer Richtung entlang einer Drehachse des langgestreckten Elements (20) beweglich ist;
- eine Antriebseinheit (21), die mit dem ersten Teil (20a) gekoppelt und dazu eingerichtet ist, das langgestreckte Element (20) zu drehen und das langgestreckte Element (20) in einer linearen Richtung zu bewegen, die im Wesentlichen parallel zur Drehachse des langgestreckten Elements (20) ist;
- einen Greifer (23), der mit dem zweiten Teil (20b) gekoppelt ist, wobei der Greifer (23) dazu eingerichtet ist, den entnehmbaren Gegenstand (27) zu ergreifen;
**dadurch gekennzeichnet, dass** die Vorrichtung darüber hinaus umfasst:
- eine Abtasteinheit (25), die dazu eingerichtet ist, eine Bewegung des zweiten Teils (20b) im Hinblick auf das erste Teil (20a) zu erfassen;
wobei die Vorrichtung dazu eingerichtet ist, den Greifer (23) zu aktivieren, wenn die Abtasteinheit (25) eine bestimmte Art von Bewegung erfasst.

2. Vorrichtung nach Anspruch 1, wobei die bestimmte Art von Bewegung einer Bewegung des zweiten Teils (20b) zu einer Position innerhalb eines bestimmten Abstands vom ersten Teil (20a) entspricht.

3. Vorrichtung nach Anspruch 1 oder 2, wobei die Abtasteinheit (25) darüber hinaus dazu eingerichtet ist, ein Abtastsignal zu erzeugen, das eine Erfassung der bestimmten Art von Bewegung anzeigt, und die Vorrichtung darüber hinaus eine Steuereinheit (29) umfasst, die dazu eingerichtet ist, den Greifer (23) in Reaktion auf den Empfang des Abtastsignals zu aktivieren.

4. Vorrichtung nach Anspruch 3, wobei die Abtasteinheit (25) einen Lichtsensor mit einer Lichtquelle (41) und einen Fotodetektor (43) umfasst, und die Steuereinheit (29) dazu eingerichtet ist, den Greifer (23) in Reaktion auf ein Abtastsignal zu aktivieren, das einen bestimmten Unterschied in der Lichtstärke anzeigt.

5. Vorrichtung nach Anspruch 3, wobei die Abtasteinheit (25) einen Drucksensor aufweist, der dazu eingerichtet ist, eine Druckkraft zwischen dem ersten Teil (20a) und dem zweiten Teil (20b) zu messen, und die Steuereinheit (29) dazu eingerichtet ist, den Greifer (23) ein Abtastsignal zu aktivieren, das einen bestimmten Unterschied in der Druckkraft anzeigt.

6. Vorrichtung nach einem der Ansprüche 2 bis 5, wobei die Steuereinheit (29) dazu eingerichtet ist, eine Kolbenkonstruktion (51, 53) zu verwenden, um den Greifer (23) zu aktivieren.

7. Vorrichtung nach einem der vorhergehenden Ansprüche, wobei der Greifer (23) mit mindestens zwei Greifeinheiten (33) versehen ist, wobei die mindestens zwei Greifeinheiten (33) im Hinblick aufeinander so angeordnet sind, dass eine Greifaktion ermöglicht ist.

8. Vorrichtung nach Anspruch 7, wobei die mindestens zwei Greifeinheiten (33) eine halbkreisförmige Gestalt haben.

9. Vorrichtung nach einem der vorhergehenden Ansprüche, wobei es sich bei dem drehbar entnehmbaren Gegenstand (27) um einen Tankdeckel (35) eines Kraftstofftanks eines Fahrzeugs handelt.

10. Fahrzeugauftanksystem, das Folgendes umfasst:
- eine mit Kraftstoff versehene Auftankstation (1);
- einen an die Auftankstation (1) angeschlossenen Zapfhahn (5);
- einen Roboter (7), der mit einem Roboterarm (11) versehen ist, der in mindestens drei Richtungen beweglich ist, wobei der Roboter (7) dazu eingerichtet ist, den Zapfhahn (5) zu tragen und den Zapfhahn (5) entsprechend Bewegungsbefehlen zu bewegen; und
- ein Computersystem (9), das dazu eingerichtet ist, dem Roboter (7) die Bewegungsbefehle bereitzustellen;
wobei der Roboterarm eine Vorrichtung nach einem der Ansprüche 1 bis 8 aufnimmt.

11. Verfahren zur Handhabung eines aus einem größeren Gegenstand entnehmbaren Gegenstands, wobei der entnehmbare Gegenstand eine Drehachse hat und aus dem größeren Gegenstand durch Drehung des entnehmbaren Gegenstands (27) in einer ersten Drehrichtung entnommen werden kann und am größeren Gegenstand durch Drehen des entnehmbaren Gegenstands (27) in einer zweiten Drehrichtung angebracht werden kann, wobei die erste Drehrichtung der zweiten Drehrichtung entgegengesetzt ist, wobei das Verfahren umfasst:
- Bewegen einer Vorrichtung nach einem der Ansprüche 1 bis 9 in Richtung zum entnehmbaren Gegenstand (27), und zwar in einer ersten linearen Richtung, die im Wesentlichen parallel zur Drehachse des entnehmbaren Gegenstands (27) ist, während die Vorrichtung in der zweiten Drehrichtung gedreht wird;
- Aktivieren einer Bewegungserfassung des zweiten Teils (20b) des drehbaren langgestreckten Elements (20) im Hinblick auf das erste Teil (20a) von diesem, und zwar eine vorbestimmte Zeit lang;
- Aktivieren des Geifers (23), entweder beim Erfassen einer bestimmten Art von Bewegung oder, falls die bestimmte Art von Bewegung innerhalb der vorbestimmten Zeit nicht erfasst wurde, nachdem die vorbestimmte Zeit verstrichen ist;
- Stoppen des Bewegens und Drehens der Vorrichtung;
- Bewegen der Vorrichtung in einer zweiten linearen Richtung, wobei die zweite lineare Richtung der ersten linearen Richtung im Wesentlichen entgegengesetzt ist, und dabei Drehen der Vorrichtung in der ersten Drehrichtung.

12. Verfahren nach Anspruch 11, wobei die bestimmte Art von Bewegung einer Bewegung des zweiten Teils (20b) zu einer Position innerhalb eines bestimmten Abstands vom ersten Teil (20a) entspricht.

13. Verfahren nach Anspruch 11 oder 12, wobei das Verfahren darüber hinaus umfasst:
- Bestimmen einer Entnahme des drehbar entnehmbaren Gegenstands (27); und
- Stoppen des Drehens in der ersten Drehrichtung und dabei Fortsetzen des Bewegens in der zweiten linearen Richtung.

14. Verfahren nach einem der Ansprüche 10 bis 13, wobei das Bestimmen erfolgt, indem eine vorbestimmte Anzahl von Drehungen in der ersten Drehrichtung gezählt wird.

15. Verfahren nach einem der Ansprüche 11 bis 14, wobei das Verfahren zwischen dem Aktivieren des Greifers (23) und dem Stoppens des Bewegens in einer ersten linearen Richtung und dem Drehen in einer zweiten Drehrichtung darüber hinaus umfasst, die Vorrichtung während einer weiteren vorbestimmten Zeitdauer weiter in der zweiten Drehrichtung zu drehen.

## Revendications

1. Dispositif pour manipuler un objet amovible d'un objet plus grand, l'objet amovible (27) étant amovible de l'objet plus grand par rotation de l'objet amovible (27) dans un premier sens de rotation et étant attachable à l'objet plus grand par rotation de l'objet amovible (27) dans un deuxième sens de rotation, le premier sens de rotation étant opposé au deuxième sens de rotation, le dispositif comprenant :
- un élément allongé rotatif (20) comprenant une première partie (20a) et une deuxième partie (20b), ladite deuxième partie (20b) étant mobile par rapport à ladite première partie (20a) dans un sens le long d'un axe de rotation dudit élément allongé (20) ;
- une unité d'entraînement (21) couplée à ladite première partie (20a) et agencée pour faire tourner ledit élément allongé (20) et déplacer ledit élément allongé (20) dans un sens linéaire sensiblement parallèle au dit axe de rotation dudit élément allongé (20) ;
- un préhenseur (23) couplé à ladite deuxième partie (20b), le préhenseur (23) étant agencé pour prendre l'objet amovible (27) ;
**caractérisé en ce que** le dispositif comprend en outre :
- une unité de détection (25) agencée pour détecter le mouvement de ladite deuxième partie (20b) par rapport à ladite première partie (20a) ;
dans lequel ledit dispositif est agencé pour activer ledit préhenseur (23) à la détection d'un certain type de mouvement par l'unité de détection (25).

2. Dispositif selon la revendication 1, dans lequel ledit certain type de mouvement correspond à un mouvement de ladite deuxième partie (20b) vers une position à une distance prédéterminée de ladite première partie (20a).

3. Dispositif selon la revendication 1 ou 2, dans lequel ladite unité de détection (25) est en outre agencée pour générer un signal de détection indiquant la détection dudit certain type de mouvement, et ledit dispositif comprend en outre une unité de commande (29) agencée pour activer ledit préhenseur (23) en réponse à la réception dudit signal de détection.

4. Dispositif selon la revendication 3, dans lequel ladite unité de détection (25) comprend un capteur de lumière ayant une source de lumière (41) et un détecteur de lumière (43), et ladite unité de commande (29) est agencée pour activer le préhenseur (23) en réponse à un signal de détection indiquant une certaine différence d'intensité de lumière.

5. Dispositif selon la revendication 3, dans lequel ladite unité de détection (25) comprend un capteur de pression agencé pour mesurer une force de pression entre ladite première partie (20a) et ladite deuxième partie (20b), et ladite unité de commande (29) est agencée pour activer le préhenseur (23) en réponse à un signal de détection indiquant une certaine différence de force de pression.

6. Dispositif selon l'une quelconque des revendications 2 à 5, dans lequel ladite unité de commande (29) est agencée pour utiliser une construction de piston (51, 53) pour activer ledit préhenseur (23).

7. Dispositif selon l'une quelconque des revendications précédentes, dans lequel ledit préhenseur (23) est muni d'au moins deux unités de préhension (33), les au moins deux unités de préhension (33) étant agencées l'une par rapport à l'autre pour permettre une action de préhension.

8. Dispositif selon la revendication 7, dans lequel lesdites au moins deux unités de préhension (33) ont une forme semi-circulaire.

9. Dispositif selon l'une quelconque des revendications précédentes, dans lequel ledit objet amovible de manière rotationnelle (27) est un bouchon de remplissage (35) d'un réservoir de carburant d'un véhicule.

10. Système de remplissage de carburant de véhicule comprenant :
- une station de remplissage de carburant (1) à laquelle du carburant est fourni ;
- une buse de remplissage de carburant (5) raccordée à la station de remplissage de carburant (1) ;
- un robot (7) pourvu d'un bras de robot (11) qui est mobile dans au moins trois sens, ledit robot (7) étant agencé pour porter ladite buse de remplissage de carburant (5) et déplacer ladite buse de remplissage de carburant (5) en fonction d'instructions de mouvement ; et
- un système informatique (9) agencé pour fournir lesdites instructions de mouvement au dit robot (7) ;
dans lequel ledit bras de robot accueille un dispositif selon l'une quelconque des revendications 1 - 8.

11. Procédé pour manipuler un objet amovible d'un objet plus grand, l'objet amovible (27) ayant un axe de rotation et étant amovible de l'objet plus grand par rotation de l'objet amovible (27) dans un premier sens de rotation et étant attachable à l'objet plus grand par rotation de l'objet amovible (27) dans un deuxième sens de rotation, le premier sens de rotation étant opposé au deuxième sens de rotation, le procédé comprenant :
- le déplacement d'un dispositif selon l'une quelconque des revendications 1 - 9 vers ledit objet amovible (27) dans un premier sens linéaire sensiblement parallèle à l'axe de rotation de l'objet amovible (27), tout en faisant tourner ledit dispositif dans ledit deuxième sens de rotation ;
- l'activation de la détection de mouvement de la deuxième partie (20b) de l'élément allongé rotatif (20) par rapport à la première partie (20a) de celui-ci pendant une période de temps prédéterminée ;
- l'activation du préhenseur (23), soit à la détection d'un certain type de mouvement soit, si ledit certain type de mouvement n'a pas été détecté au cours de ladite période de temps prédéterminée, après l'écoulement de ladite période de temps prédéterminée ;
- l'arrêt dudit déplacement et de ladite rotation du dispositif ;
- le déplacement dudit dispositif dans un deuxième sens linéaire, ledit deuxième sens linéaire étant sensiblement opposé au dit premier sens linéaire, tout en faisant tourner ledit dispositif dans ledit premier sens de rotation.

12. Procédé selon la revendication 11, dans lequel ledit certain type de mouvement correspond à un mouvement de ladite deuxième partie (20b) vers une position à une distance prédéterminée de ladite première partie (20a).

13. Procédé selon la revendication 11 ou 12, dans lequel ledit procédé comprend en outre :
- la détermination de l'enlèvement dudit objet amovible de manière rotationnelle (27) ; et
- l'arrêt de ladite rotation dans ledit premier sens de rotation tout en continuant ledit déplacement dans ledit deuxième sens linéaire.

14. Procédé selon l'une quelconque des revendications 10 - 13, dans lequel ladite détermination est effectuée en comptant un nombre prédéterminé de rotations dans ledit premier sens de rotation.

15. Procédé selon l'une quelconque des revendications 11 - 14, dans lequel ledit procédé, entre ladite activation du préhenseur (23) et l'arrêt dudit déplacement dans un premier sens linéaire et la rotation dans un deuxième sens de rotation, comprend en outre la poursuite de la rotation dudit dispositif dans ledit deuxième sens de rotation au cours d'une autre période de temps prédéterminée.
